Europäisches Patentamt

European Patent Office

Office européen des brevets

(11) Numéro de publication : **0 298 793 B1**

# (12) FASCICULE DE BREVET EUROPEEN

(45) Date de publication du fascicule du brevet :
08.04.92 Bulletin 92/15

(51) Int. Cl.⁵ : **G06F 12/02**

(21) Numéro de dépôt : **88401430.9**

(22) Date de dépôt : **10.06.88**

(54) **Circuit pour mémoriser des états de disponibilité de ressources logiques, telles que cellules de mémoire, et établir des adresses de ressources libres.**

(30) Priorité : **26.06.87 FR 8709068**

(43) Date de publication de la demande :
**11.01.89 Bulletin 89/02**

(45) Mention de la délivrance du brevet :
**08.04.92 Bulletin 92/15**

(84) Etats contractants désignés :
**BE CH DE GB LI LU NL SE**

(56) Documents cités :
**IBM TECHNICAL DISCLOSURE BULLETIN,
vol. 4, no. 10, mars 1962, page 81, New York,
US; R.W. KING: "Data storage system"**

(73) Titulaire : **Servel, Michel
Le Rhu en Servel
F-22300 Lannion (FR)**

Titulaire : **Gonet, Patrick
Kerninon
F-22660 Trelevern (FR)**
Titulaire : **François, Joel
Prat Cotel Bihan Saint Quay Perros
F-22700 Perros-Guirec (FR)**

(72) Inventeur : **Servel, Michel
Le Rhu en Servel
F-22300 Lannion (FR)**
Inventeur : **Gonet, Patrick
Kerninon
F-22660 Trelevern (FR)**
Inventeur : **François, Joel
Prat Cotel Bihan Saint Quay Perros
F-22700 Perros-Guirec (FR)**

(74) Mandataire : **Martinet & Lapoux
BP 405
F-78055 St. Quentin en Yvelines Cédex (FR)**

Description

La présente invention concerne, d'une manière générale, la gestion de la disponibilité de ressources logiques. Ces ressources peuvent être par exemple des ports d'accès, des serveurs, des unités de traitement de données adressables, ou des unités de mémoire d'une base de données.

Afin de fixer les idées, on se réfère dans la suite à des ressources logiques simples telles que des cellules d'une mémoire de données.

Ainsi, en particulier, l'invention a trait à la surveillance de la disponibilité de cellules d'une mémoire de données, du genre mémoire vive RAM, dans lesquelles sont écrites et lues des données à des instants pratiquement aléatoires. En d'autres termes, la réception des données dans la mémoire est tout à fait sporadique. Il est alors nécessaire de connaître en permanence non seulement les adresses des cellules occupées ayant déjà mémorisé des données et non encore lues, mais également les adresses des cellules inoccupées afin de les adresser en écriture pour mémoriser de prochaines données reçues. La surveillance permanente de l'état de disponibilité des cellules de la mémoire de données et l'adressage dynamique en écriture des cellules de données permettent notamment d'optimiser la capacité de la mémoire de données en fonction du flux statistique moyen des données reçues.

A titre d'exemple, la mémoire de données peut être une mémoire tampon incluse dans un système de commutation de données asynchrones, et éventuellement synchrones, rassemblées en paquets. Les paquets reçus sont transmis sporadiquement par des sources de données et sont ainsi à écrire à des instants aléatoires dans la mémoire de données. En lecture, les paquets d'une source de données sont à retransmettre vers une ou plusieurs sources de données, ou bien les paquets de plusieurs sources de données sont à retransmettre vers une même source de données. Il en résulte que la lecture des paquets dépend de la capacité de réception des sources de données, et par suite, la durée de mémorisation des paquets est fluctuante. Aussi, afin de ne point perdre des données reçues, il est nécessaire de les écrire dans des cellules inoccupées, dépourvues de données antérieures déjà écrites et non encore lues.

L'article de R.W. King paru dans IBM Technical Disclosure Bulletin, Vol. 4, No. 10, mars 1962, page 81, New York (US) et intitulé "DATA STORAGE SYSTEM" présente très sommairement un circuit de gestion d'une mémoire de données comprenant une matrice de cellules et des moyens de détection conformes au préambule de la revendication 1.

La présente invention vise donc à résoudre le problème de surveillance permanente de la disponibilité d'une mémoire de données à accès aléatoire, et plus généralement la disponibilité d'un ensemble de ressources logiques, en fournissant les moyens détaillés pour réaliser un circuit pour établir les adresses de cellules disponibles dans la mémoire de données en fonction des états libres et occupés de cellules de données.

A cette fin, un tel circuit selon l'invention est tel que défini dans la revendication 1.

Selon une réalisation préférée décrite en détail dans la suite de la description, la surveillance des états de ressources logiques organisées en un ensemble matriciel, telles que des cellules d'une mémoire de données, s'effectue d'abord ligne par ligne - respectivement colonne par colonne - afin d'y déceler les lignes - respectivement colonnes - de mémoire contenant des cellules libres et de sélectionner l'une d'entre elles, puis colonne par colonne - respectivement ligne par ligne - afin de sélectionner une cellule libre dans la ligne - respectivement colonne-sélectionnée dans laquelle sera décrite les prochaines données reçues. Dans ce cas, les moyens de détection comprennent d'une part, plusieurs premiers moyens de lecture respectivement assignés aux lignes de la matrice de cellules pour lire les bits d'état libre dans les lignes de la matrice, des premiers moyens de sélection prioritaire reliés auxdits premiers moyens de lecture pour sélectionner prioritairement l'une des lignes de la matrice dans laquelle est lu au moins un bit d'état libre, en fonction d'un critère d'ordre de priorité des lignes de matrice prédéterminé ou programmé, et des premiers moyens d'établissement d'adresse reliés auxdits premiers moyens de sélection prioritaire pour établir l'adresse de la ligne de matrice prioritaire sélectionnée, d'autre part, plusieurs seconds moyens de lecture respectivement assignés aux colonnes de la matrice de cellule et reliés auxdits premiers moyens d'établissement d'adresse pour établir pour lire les bits d'état libre dans la ligne prioritaire sélectionnée, des seconds moyens de sélection prioritaire reliés auxdits seconds moyens de lecture pour sélectionner prioritairement l'une des colonnes de la matrice ayant une cellule incluse dans la ligne prioritaire sélectionnée et contenant un bit d'état libre lu, en fonction d'un critère d'ordre de priorité des colonnes de matrice prédéterminé ou programmé, et des seconds moyens d'établissement d'adresse reliés aux seconds moyens de sélection prioritaire pour établir l'adresse de la colonne de matrice prioritaire sélectionnée.

En particulier, lorsque toutes les cellules de la mémoire de données sont susceptibles de mémoriser des données asynchrones, la matrice de cellules à un bit est une "image" de la cellule de données, c'est-à-dire possède un nombre de cellules égal à celui de la mémoire de données, et les adresses de ligne et colonne des cellules de la matrice sont respectivement identiques aux adresses des cellules de la mémoire de données.

D'autres caractéristiques et avantages de la présente invention apparaitront plus clairement à la lecture de la description suivante en référence aux dessins annexés correspondants dans lesquels :

– la Fig. 1 est un bloc-diagramme détaillé d'un circuit pour établir des adresses de cellules disponibles d'une mémoire de données selon l'invention; et

– la Fig. 2 montre en détail une cellule à un bit d'état incluse dans une matrice du circuit montré à la Fig. 1.

Selon la réalisation décrite ci-après, il est supposé qu'un circuit selon l'invention est destiné à surveiller une mémoire de données à accès aléatoire RAM ayant I x J = 1024 cellules de données. Les cellules dans la mémoire de données constituent des ressources logiques particulières, telles que définies ci-dessus. Les cellules sont par exemple organisées en une matrice ayant I = 16 colonnes et J=64 lignes (ou rangées), afin de permettre d'enregistrer 1024 octets, tels que des premiers octets, dits étiquettes, dans des blocs de données de longueur constante transmis par 16 multiplex temporels entrants parallèles. Chaque multiplex convoie des trames de 68 blocs de données par exemple, précédés par un bloc de verrouillage de trame, et chaque bloc de données comporte 16 octets, soit 16 x 8 = 128 bits. Un bloc de données peut être composé soit de données en mode-paquet, c'est-à-dire d'un paquet asynchrone proprement dit, éventuellement vide, soit de données en mode-circuit, c'est-à-dire un ensemble de 16 octets consécutifs d'une voie de parole. Ainsi dans ce cas, chaque cellule de la mémoire de données est propre à mémoriser 8 bits, soit un octet de données.

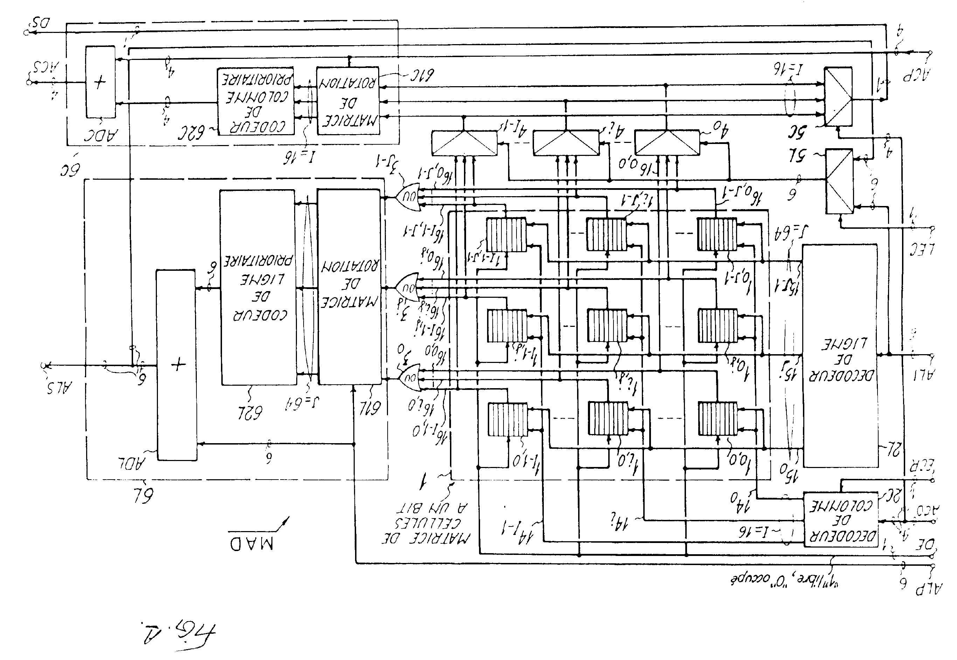

En référence à la Fig. 1, le circuit pour mémoriser les états des cellules de la mémoire de données et établir des adresses de cellules libres de cette mémoire de données, appelé ci-après "circuit de mémorisation d'adresses disponibles" MAD, est organisé autour d'une matrice 1 ayant I = 16 colonnes et J = 64 lignes (ou rangées) de cellules à un bit identiques $1_{0,0}$ à $1_{I-1,J-1} = 1_{15,63}$.

Chacune des cellules, telles que la cellule $1_{i,j}$, où i est un indice entier compris entre 0 et I-1 = 15 et j un indice entier compris entre 0 et J - 1 = 63, est destinée à mémoriser l'état de la cellule d'un octet correspondante dans la mémoire de données. Cet état est indiqué par un bit "1" lorsque la cellule de mémoire de données est disponible, c'est-à-dire libre de données, ou contenant des données qui ne sont plus à lire et qui peuvent être effacées, et par un bit "0" lorsque la cellule de mémoire est indisponible, c'est-à-dire occupée par un octet de données qui doit être lu au moins une fois, respectivement.

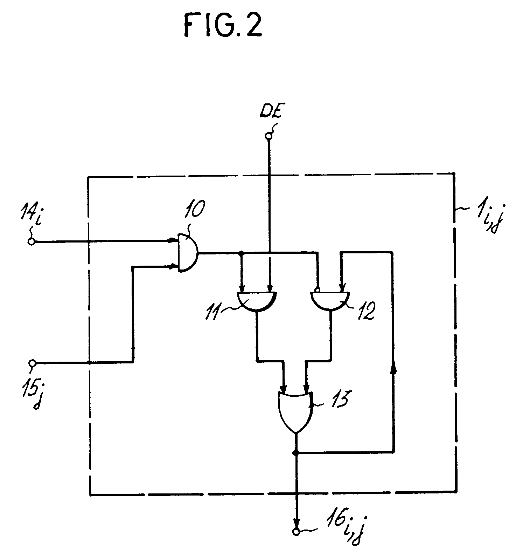

Comme montré à la Fig. 2, la cellule $1_{i,j}$ comprend deux portes ET à deux entrées 10 et 11, une porte ET 12 ayant une entrée directe et une entrée inverseuse, et une porte OU à deux entrées 13. Une première entrée d'adressage de la porte 10 est reliée à un fil $14_i$ adressant les 64 cellules $1_{i,0}$ à $1_{i,63}$ de la colonne de rang i et inclus dans un bus de colonne à I = 16 fils $14_0$ à $14_{15}$ sortant d'un décodeur de colonne 2C. Une seconde entrée d'adressage de la porte 10 est reliée à un fil $15_j$ adressant les 16 cellules $1_{0,j}$ à $1_{15,j}$ de la ligne de rang j et inclus dans un bus de ligne à J = 64 fils $15_0$ à $15_{63}$ sortant d'un décodeur de ligne 2L. La sortie de la porte ET 10 est reliée à une première entrée de la porte 11 et à l'entrée inverseuse de la porte 12. Une seconde entrée de la porte ET 11 est reliée à une entrée de données DE du circuit MAD qui est reliée à toutes les secondes entrées des portes 11 dans les cellules $1_{0,0}$ à $1_{I-1,j-1}$ et qui transmet des bits d'état des cellules de la mémoire de données. Les entrées de la porte OU 13 sont reliées aux sorties des portes ET 11 et 12, respectivement. La sortie de la porte 13 constitue la sortie $16_{i,j}$ de la cellule $1_{i,j}$ et est reliée à l'entrée directe de la porte 12. La sortie de la porte 13 est également reliée à une entrée de rang i d'une porte OU $3_j$ ayant I = 16 entrées reliées respectivement aux sorties des cellules $1_{0,j}$ à $1_{15,j}$ dans la ligne de rang j, et à une entrée de rang j d'un multiplexeur $4_i$ ayant J = 64 entrées reliées respectivement aux sorties des cellules $1_{i,0}$ à $1_{i,63}$ dans la colonne de rang i. Ainsi comme montré à la Fig. 1, le circuit MAD comprend J = 64 portes OU $3_0$ à $3_{63}$ ayant chacune I = 16 entrées reliées aux sorties des cellules $1_{0,0}$ à $1_{15,0}$, à $1_{0,63}$ à $1_{15,63}$ dans la ligne correspondante de rang 0 à 63, et I = 16 multiplexeurs $4_0$ à $4_{15}$ ayant chacun J = 64 entrées reliées aux sorties des cellules $1_{0,0}$ à $1_{0,63}$ à $1_{15,0}$ à $1_{15,63}$ de la colonne correspondante de rang 0 à 15.

De l'agencement des portes 10 à 13 dans la cellule $1_{i,j}$ montrée à la Fig. 2, il apparaît que, lorsque la cellule est adressée simultanément par les fils d'adressage $14_i$ et $15_j$ tous deux à l'état "1", la porte ET 11 est ouverte pour appliquer le bit d'état transmis par l'entrée DE à l'entrée directe de la porte 12 à travers la porte OU 13, et que la porte 12 est fermée afin de mémoriser le bit d'état. Cette mémorisation est validée dès que l'un des fils d'adresse $14_i$ et $15_j$ passe à l'état "0", ce qui se traduit par une fermeture des portes 10 et 11 qui empêche toute mémorisation d'un nouveau bit d'état jusqu'au prochain état simultané "1" des fils $14_i$ et $15_j$, et par une ouverture de la porte ET 12 qui permet de maintenir la sortie de la cellule à l'état du bit d'état et de mémoriser ce bit d'état par le bouclage de la porte OU 13 à travers l'entrée directe de la porte 12.

Comme montré à la Fig. 1, le circuit MAD comprend également un multiplexeur 5L pour sélectionner l'une des lignes de la matrice de cellules 1, un multiplexeur 5C pour sélectionner l'une des colonnes de la matrice de cellules 1 et plus précisément, l'une des cellules dans la ligne sélectionnée par le multiplexeur 5L, un circuit de codage d'adresse de ligne 6L pour détecter les lignes contenant chacune au moins une cellule mémorisant un bit d'état libre "1" et coder prioritairement l'adresse de l'une de ces lignes, et un circuit de codage d'adresse de colonne 6C pour détecter les colonnes contenant chacune au moins une cellule mémorisant un bit d'état libre "1" et coder prioritairement l'adresse de l'une de ces colonnes.

Du côté des entrées, le circuit MAD offre, outre l'entrée de données DE, un bus d'adresse de colonne ACO ayant $4 = \log_2 I = \log_2 16$ fils reliés aux entrées de données du décodeur 2C et aux entrées de sélection du multiplexeur 5C, une entrée de commande en écriture ECR reliée à l'entrée de validation d'au moins l'un des décodeurs 2C et 2L, tel que le décodeur de colonne 2C, un bus d'adresse de ligne ALI ayant $6 = \log_2 J = \log_2 64$ fils reliés aux entrées de données du décodeur 2L et à des premières entrées de données du multiplexeur 5L, et une entrée de commande en lecture LEC reliée à l'entrée de sélection du multiplexeur 5L.

Le multiplexeur 5L a six secondes entrées reliées à la sortie du circuit de codage 6L constituant un bus d'adresse d'écriture de ligne ALS pour cellule de donnée disponible sélectionnée, et six sorties reliées aux entrées de sélection des multiplexeurs $4_0$ à $4_{I-1}$ assignées aux colonnes de la matrice de cellules 1. Les sorties des portes OU $3_0$ à $3_{J-1}$ sont reliées respectivement à J entrées du circuit de codage 6L. Le multiplexeur 5C a $I = 16$ entrées reliées respectivement aux sorties des multiplexeurs $4_0$ à $4_{I-1}$ et aux entrées du second circuit de codage 6C, et une sortie de donnée DS transmettant le bit d'état lu et sélectionné. Quatre sorties du circuit de codage 6C constituent un bus d'adresse d'écriture de colonne ACS pour cellule de donnée disponible sélectionné.

Le circuit de codage d'adresse de ligne 6L comprend une matrice de rotation 61L ayant $J = 64$ entrées parallèles reliées respectivement aux sorties des portes OU $3_0$ à $3_{J-1}$, un codeur d'adresse de ligne prioritaire 62L ayant $J = 64$ entrées parallèles reliées respectivement à 64 sorties de la matrice de rotation 61L, et un additionneur à 6 bits ADL recevant d'une part, le bus de sortie à $\log_2 J = \log_2 64 = 6$ fils du codeur 62L et d'autre part un autre bus à 6 fils ALP, dont le rôle sera expliqué plus en détail par la suite. Le bus ALS à 6 fils constitue la sortie de l'additionneur ADL.

De même, le circuit de codage de colonne 6C comprend une matrice de rotation 61C ayant $I = 16$ entrées parallèles reliées respectivement aux sorties des multiplexeurs $4_0$ à $4_{I-1}$, un codeur d'adresse de colonne prioritaire 62C ayant $I = 16$ entrées parallèles reliées respectivement à 16 sorties de la matrice de rotation 61C, et un additionneur à 4 bits ADC recevant d'une part, le bus de sortie à $\log_2 I = \log_2 16 = 4$ fils du codeur 62C et d'autre part un autre bus à 4 fils ACP dont le rôle sera expliqué plus en détail par la suite. Le circuit 6C a pour sortie un bus ACS à 4 fils constituant la sortie de l'additionneur ADC.

De préférence, les matrices de rotation 61L et 61C sont programmables par un mot d'adresse de ligne prioritaire ayant 6 bits et un mot d'adresse de colonne prioritaire ayant 4 bits qui sont appliqués par les bus d'entrée ALP et ACP du circuit MAD, respectivement, afin de choisir la ligne et la colonne ayant la plus forte priorité, c'est-à-dire la cellule parmi 1024 cellules ayant la plus forte priorité, ou bien encore de modifier le critère d'ordre prioritaire préetabli des adresses de ligne et colonne.

En pratique, une matrice de rotation 61L, 61C a pour rôle d'effectuer une rotation des entrées sur les sorties de façon à faire correspondre une entrée d'indice dit prioritaire k de la matrice à la première sortie d'indice 0 de la matrice, où k est un entier compris entre 0 et J-1, 0 et I-1, et plus généralement, à faire correspondre une entrée donnée de la matrice à une sortie de la matrice ayant un indice k fois moindre, lorsque les bits ALP, ACP ont pour valeur k. Le codeur d'adresse prioritaire 62L, 62C est conçu de manière à fournir une adresse correspondant au premier bit à "1" parmi ses propres entrées d'indice 0 à J-1, 0 à I-1 sélectionnées successivement selon cet ordre. Le fait de faire "tourner" les entrées des codeurs 62L et 62C avant application d'une priorité statique câblée au niveau des codeurs revient en fait à modifier le rang prioritaire et les rangs suivants des entrées de codeur. Les adresses en sortie des codeurs 62L et 62C sont en fait des adresses décalées de la valeur k. Il est donc nécessaire de prévoir, pour la réalisation illustrée, les additionneurs ADL et ADC pour retrouver les adresses correctes ALS et ACS correspondant à la cellule de matrice sélectionnée.

Il est à noter, en pratique, que les entrées du circuit MAD peuvent être reliées à des entrées d'adressage en lecture de la mémoire de données à travers une unité logique de gestion d'adressage afin de commander principalement l'écriture de la mémoire de donnée en fonction de l'utilisation de celle-ci qui peut concerner une commutation de blocs de données entre des multiplex entrants et sortants dans un système de commutation temporel. L'unité logique précitée n'appartient pas à l'objet de la présente demande de brevet et ne sera donc pas décrite.

Le fonctionnement du circuit MAD est maintenant décrit, d'abord pour écrire un bit d'état de cellule de la mémoire donnée, puis pour lire le bit d'état dans l'une des cellules de la matrice 1 et enfin, pour sélectionner et transmettre l'adresse d'une cellule de la mémoire de donnée libre et prioritaire.

On suppose qu'un bit d'état transmis par l'entrée DE est à enregistrer dans la cellule $1_{i,j}$.

Pendant une première demi-période d'horloge d'octet de données, le bus d'entrée ACO reçoit le numéro en code binaire de la colonne i, le bus d'entrée ALI reçoit le numéro en code binaire de la ligne j, et l'entrée d'écriture ECR reçoit un signal d'écriture à l'état "1". Le décodeur 2C décode le numéro i en appliquant un "1" sur le fil de colonne $14_i$ et un "0" sur les autres fils de colonne $14_0$ à $14_{I-1}$ et

$14_{i+1}$ à $14_I$ après validation par le signal d'écriture à l'entrée ECR. Simultanément le décodeur de ligne 2L décode le numéro de ligne j en appliquant un "1" sur le fil $15_j$ et un "0" sur les autres fils de ligne $15_0$ à $15_{j-1}$ et $15_{j+1}$ à $15_J$. Ainsi seule la cellule $1_{i,j}$ a ses entrées $14_i$ et $15_j$ simultanément à l'état "1" et par suite, le bit d'état à l'entrée DE est mémorisé dans la cellule $1_{i,j}$ dès que le signal d'écriture ECR revient à l'état "0". Il est à noter que la validation du décodage dans l'un des décodeurs 2C et 2L est suffisante, puisqu'un décodage d'une adresse par l'autre décodeur, tel que le décodeur 2L, sans validation de l'adresse de colonne dans le décodeur 2C, implique des états "0" et "1" aux entrées d'adressage de la cellule, et par suite maintient fermées les portes ET 10 et 11 dans cette cellule.

Si l'on désire lire le contenu d'une cellule, par exemple de la cellule $1_{i,j}$, les numéros en code binaire i et j sont appliqués par les bus ACO et ALI aux entrées de sélection du multiplexeur 5C et aux premières entrées du multiplexeur 5L respectivement, et un signal de lecture à l'état haut "1" est appliqué par l'entrée LEC à l'entrée de sélection du multiplexeur 5L pendant une seconde demi-période d'horloge d'octet. La sortie du multiplexeur 5L transmet le numéro j aux entrées de sélection des multiplexeurs $4_0$ à $4_{I-1}$ afin que chacun de ces I multiplexeurs appliquent aux I = 16 entrées du multiplexeur 5C les états des bits, "0" ou "1", des cellules $1_{0,j}$ à $1_{15,j}$ de la ligne de rang j aux entrées du multiplexeur 5C, respectivement. Dans le multiplexeur 5C, le numéro de colonne i sélectionne la sortie du multiplexeur $4_i$ et, par suite, la sortie DS transmet le bit d'état lu dans la cellule $1_{i,j}$.

Le choix d'une cellule libre dans la mémoire de données correspondant à une cellule contenant un bit d'état "1" dans la matrice 1 est effectué en permanence d'abord par une sélection de ligne, puis par une sélection de colonne lorsque le signal de lecture à l'entrée LEC est à l'état bas "0".

Les J = 64 portes OU $3_0$ à $3_{J-1}$ collectent les bits d'état mémorisés dans les cellules, ligne par ligne. Une sortie à l'état haut "1" de l'une des portes OU, telle que la porte $3_j$, indique qu'au moins l'une des sorties $16_{0,j}$ à $16_{I-1,j}$ de la ligne j est à l'état "1" et donc qu'au moins l'une des cellules de la ligne j dans la mémoire de données est libre et disponible pour recevoir des données. La matrice de rotation 61L est commandée par le signal du bus ALP pour déterminer la ligne qui doit être considérée comme prioritaire. Le codeur 62L explore alors l'état de ses entrées 0 à J-1 et sélectionne la première de ses entrées, selon l'ordre d'exploration numérique 0 à J-1, dont le niveau est à "1" pour délivrer en sortie le numéro de la ligne sélectionnée codé sur 6 bits. Le numéro codé est incrémenté de la valeur présente sur le bus ALP afin de fournir l'adresse de la ligne sélectionnée en fonction des critères de priorité qui ont été prévus.

L'adresse de ligne de la cellule disponible sélectionnée selon l'exemple précédent est appliquée, à travers les secondes entrées du multiplexeur de sélection de ligne 5L, aux entrées de sélection de tous les multiplexeurs $4_0$ à $4_{I-1}$ afin que ceux-ci transmettent les états des bits lus dans les cellules $1_{0,j}$ à $1_{I-1,j}$ dela ligne sélectionnée j aux entrées de la matrice de rotation 61C. La matrice 61C effectue avec le codeur 62C et l'additionneur ADC une sélection de la cellule la plus prioritaire parmi les cellules contenant un bit "1" dans la ligne sélectionnée j, sélection qui est traduite par l'adresse de colonne à 4 bits de ladite cellule la plus prioritaire dans le bus de sortie ACS du circuit de codage 6C.

Il est à noter que la réalisation préférée illustrée à la Fig. 1 peut être réduite au moins au niveau des entrées et sorties en fonction d'impératifs nécessaires à la gestion de la mémoire de données. Par exemple, le multiplexeur 5C peut être supprimé ou tout au moins la sortie DS peut être inutilisée, et par suite, le multiplexeur 5L peut être supprimé ainsi que l'entrée LEC, le bus ALS étant alors relié directement aux entrées de sélection des multiplexeurs $4_0$ à $4_{I-1}$.

Il est à noter, en pratique, que les bus d'adresse de colonne et de ligne ACO et ALI peuvent être reliés à des sorties d'un multiplexeur d'adresses qui reçoit tantôt une adresse d'écriture sélectionnée par le circuit MAD lorsqu'un octet est à écrire dans la cellule de données disponible correspondante, tantôt une adresse de lecture produite par un circuit d'adressage en lecture de la mémoire de données lorsqu'un octet mémorisé dans la cellule de données correspondante est lu pour la dernière fois. L'écriture d'un octet et la lecture d'un octet sont simultanées à des écritures de bits d'état à "0" et "1" dans la cellule de matrice correspondante, via l'entrée DE, respectivement.

En outre, il est rappelé que les entrées d'adressage ALP et ACP des matrices de rotation sont optionnelles et par suite, que les matrices de rotation 61L et 61C peuvent être remplacées par deux circuits logiques de manière à sélectionner les lignes et colonnes de cellules selon des ordres de priorité figés.

Par ailleurs les mots "ligne" et "colonne" dans la présente description et dans l'objet de la présente demande de brevet défini ci-après peuvent être remplacés par "colonne" et "ligne" respectivement, sans modifier le principe de fonctionnement du circuit MAD; ainsi l'ensemble des portes $3_0$ à $3_{J-1}$ peut être remplacé par un ensemble de multiplexeurs analo-gues aux multiplexeurs $4_0$ à $4_{I-1}$ et réciproquement, et la connexion du bus de sortie ALS de l'additionneur ADL aux multiplexeurs $4_0$ à $4_{I-1}$ peut être remplacée par une connexion du bus de sortie ACS de l'additionneur ADC aux entrées de sélection de multiplexeurs remplaçant les portes $3_0$ à $3_{J-1}$, éventuellement à travers un multiplexeur analogue au multiplexeur 5L.

Selon d'autres variantes, la matrice de cellules 1 ne peut être qu'une "image" d'une partie de la mémoire de données, ou en d'autres termes, la matrice 1 ne surveille l'état de disponibilité que de cellules prédéterminées en nombre réduit dans la mémoire de données. Dans ce cas, la capacité de la matrice 1 peut-être inférieure à celle de la mémoire de données, et les codeurs 6L et 6C fournissent non seulement les adresses de ligne et colonne de la matrice 1 correspondant à une cellule de matrice prioritaire sélectionnée, mais également les adresses de ligne et colonne de la cellule dans la mémoire de données correspondant à la cellule de matrice sélectionnée. En effet, a priori, les adresses de cellules de la matrice peuvent ne pas être identiques à celles des cellules correspondantes de la mémoire de données à surveiller.

Les cellules de la matrice 1 ont été illustrées à la Fig. 2 par des cellules statiques qui peuvent être conçues également comme des cellules du type "latch", c'est-à-dire à bascule du type D avec sortie et entrée bouclées. Toutefois, les cellules de matrice peuvent être des cellules dynamiques. Dans ce dernier cas, l'effacement du contenu dans les cellules de matrice dynamiques à l'expiration de quelques millisecondes après leur écriture peut être avantageux lorsque la durée maximale nécessaire de mémorisation d'un mot de données, tel qu'octet, dans une cellule de la mémoire de données est de l'ordre de la dizaine de microseconde, par exemple égale à $3,9\mu s$ pour des multiplex entrants à 2,048 Mbit/s; en effet, le défaut de rafraîchissement des cellules dynamiques assure qu'une cellule de la mémoire de données ne reste jamais indisponible, c'est-à-dire ne mémorise pas en permanence un mot de donnée. En outre, comme il est connu, l'utilisation de cellule dynamique présente notamment les avantages d'une consommation énergétique faible et d'une densité d'intégration élevée du fait du nombre de transistors par cellule très faible. Ce dernier avantage est particulièrement d'intérêt pour l'intégration complète du circuit MAD.

**Revendications**

1. Circuit de mémorisation d'états de disponibilité de ressources (MAD) pour établir des adresses de ressources disponibles dans un ensemble de ressources logiques en fonction des états libres et occupés des ressources comprenant :

– une matrice (1) de cellules à un bit ($1_{0,0}$ à $1_{I-1, J-1}$) qui mémorisent respectivement des bits d'état de disponibilité ("1" et "0") des ressources de l'ensemble; et

– des moyens de détection ($3_0$ à $3_{J-1}$, 6L, $4_0$ à $4_{I-1}$, 6C) reliés aux sorties ($16_{0,0}$ à $16_{I-1, J-1}$) de toutes les cellules de la matrice pour détecter toutes les cellules de la matrice contenant chacune un bit d'état libre ("1");

caractérisé en ce qu'il comprend :

– des moyens d'adressage en écriture (2C, 2L) pour adresser sélectivement lesdites cellules de la matrice ($1_{0,0}$ à $1_{I-1, J-1}$) afin d'écrire dans une cellule adressée un bit d'état de disponibilité correspondant à la ressource respective, et

– en ce que lesdits moyens de détection comprennent des moyens de lecture ($3_0$ à $3_{J-1}$, $4_0$ à $4_{I-1}$) reliés aux sorties ($16_{0,0}$ à $16_{I-1, J-1}$) de toutes les cellules de la matrice ($1_{0,0}$ à $1_{I-1, J-1}$) pour lire les bits d'état libre ("1") dans les cellules de la matrice, et des moyens de sélection prioritaire (6L, 6C) qui sont reliés auxdits moyens de lecture pour sélectionner prioritairement l'une des cellules de la matrice dans laquelle est lu un bit d'état libre ("1") et qui établissent l'adresse (ALS + ACS) de la ressource disponible correspondant à l'une des cellules de la matrice détectées en fonction d'un critère d'ordre de priorité, prédéterminé ou programmé par un mot d'adresse de ligne prioritaire (ALP) et par un mot d'adresse de colonne prioritaire (ACP) respectivement.

2. Circuit de mémorisation d'états de disponibilité de ressources conforme à la revendication 1, caractérisé en ce que les moyens de sélection prioritaire (6L, 6C) comprennent

des premiers moyens de décalage (61L) ayant des entrées recevant en parallèle, à travers lesdits moyens pour lire ($3_0$ à $3_{J-1}$), des premières informations associées respectivement aux lignes de la matrice (1), l'information associée à une ligne étant indicative de la présence ou non d'un bit d'état libre ("1") dans au moins l'une des cellules de ladite ligne,

un premier codeur de priorité (62L) recevant en parallèle les premières informations décalées par lesdits premiers moyens de décalage pour sélectionner une première information prioritaire indicative de la présence d'un bit d'état libre et coder celle-ci en un signal codé de ligne sélectionnée,

des seconds moyens de décalage (61C) ayant des entrées (I) recevant en parallèle, à travers les moyens de lecture ($4_0$ à $4_{I-1}$), des secondes informations associées respectivement aux cellules dans une ligne sélectionnée de la matrice (1) correspondant à ladite première information prioritaire sélectionnée, l'information associée à une cellule étant indicative de la présence ou non d'un bit d'état libre ("1") dans ladite cellule de ladite ligne, et

un second codeur de priorité (62C) recevant en parallèle les secondes informations décalées par lesdits seconds moyens de décalage pour sélectionner une seconde information prioritaire indicative de la présence d'un bit d'état libre et coder celle-ci en un signal codé de colonne sélectionnée.

3. Circuit de mémorisation d'états de disponibilité de ressources conforme à la revendication 2, caractérisé en ce que les premiers (61L) et seconds (61C) moyens de décalage sont des première et seconde matrices de rotation, de préférence programmables, ayant autant d'entrées et sorties que de lignes (J) et colonnes (I) dans la matrice de cellules (1) respectivement.

4. Circuit de mémorisation d'états de disponibilité de ressources conforme à la revendication 3, dans lequel des première et seconde valeurs codées de décodage dans les matrices de rotation (61L, 61C) sont programmées respectivement, caractérisé en ce que les moyens de sélection prioritaire (6L, 6C) comportent un premier additionneur (ADL) recevant le signal code de ligne sélectionnée par le premier codeur de priorité (62L) et la première valeur codée de décalage programmée dans la première matrice de rotation (61L) pour délivrer l'adresse (ALS) de la ligne de la cellule sélectionnée contenant un bit d'état libre, et un second additionneur (ADP) recevant le signal code de colonne sélectionnée par le second codeur de priorité (62C) et la seconde valeur codée de décalage programmée dans la seconde matrice de rotation (61C) pour délivrer l'adresse (ACS) de la colonne de la cellule sélectionnée contenant un bit d'état libre.

5. Circuit de mémorisation d'états de disponibilité de ressources conforme à la revendication 1, caractérisé en ce que les moyens de détection comprennent plusieurs premiers moyens de détection ($3_0$ à $3_{J-1}$, 6L) respectivement assignés aux lignes de la matrice de cellule (1) pour détecter des lignes de la matrice ayant chacune au moins une cellule de matrice contenant un bit d'état libre ("1") afin d'établir l'adresse (ALS) de l'une des lignes de matrice détectées, et plusieurs seconds moyens de détection ($4_0$ à $4_{I-1}$, 6C) respectivement assignés aux colonnes de la matrice de cellules (1) et reliés aux premiers moyens de détection ($3_0$ à $3_{J-1}$, 6L) pour détecter les cellules contenant un bit d'état libre ("1") et incluses dans la ligne dont l'adresse est établie afin d'établir l'adresse (ACS) de la colonne ayant l'une des cellules détectées incluses dans ladite ligne dont l'adresse est établie.

6. Circuit de mémorisation d'états de disponibilité de ressources conforme à la revendication 5, caractérisé en ce que les premiers moyens de détection comprennent plusieurs premiers moyens de lecture ($3_0$ à $3_{J-1}$) respectivement assignés aux lignes de la matrice de cellules (1) pour lire les bits d'état libre ("1") dans les lignes de la matrice, des premiers moyens de sélection prioritaire (61L, 62L) reliés auxdits premiers moyens de lecture pour sélectionner prioritairement l'une des lignes de la matrice dans laquelle est lu au moins un bit d'état libre ("1"), en fonction d'un critère d'ordre de priorité des lignes de matrice prédéterminé ou programmé, et des premiers moyens d'établissement d'adresse (ADL) reliés auxdits premiers moyens de sélection prioritaire pour établir l'adresse (ALS) de la ligne de matrice prioritaire sélectionnée, et en ce que les seconds moyens de détection comprennent plusieurs seconds moyens de lecture ($4_0$ à $4_{I-1}$) respectivement assignés aux colonnes de la matrice de cellule (1) et reliés auxdits premiers moyens d'établissement d'adresse (ADL) pour lire les bits d'état libre ("1") dans la ligne prioritaire sélectionnée, des seconds moyens de sélection prioritaire (61C, 62C) reliés auxdits seconds moyens de lecture pour sélectionner prioritairement l'une des colonnes de la matrice ayant une cellule incluse dans la ligne prioritaire sélectionnée et contenant un bit d'état libre lu, en fonction d'un critère d'ordre de priorité des colonnes de matrice prédéterminé ou programmé, et des seconds moyens d'établissement d'adresse (ADC) reliés aux seconds moyens de sélection prioritaire (61C, 62C) pour établir l'adresse (ACS) de la colonne de matrice prioritaire sélectionnée.

7. Circuit de mémorisation d'états de disponibilité de ressources conforme à la revendication 6, caractérisé en ce que les premiers et seconds moyens de sélection prioritaire (61L, 62L, 61C, 62C) comprennent des matrices de rotation, de préférence programmables, ayant autant d'entrées et de sorties que de lignes (J) et de colonnes (I) dans la matrice (1), respectivement.

8. Circuit de mémorisation d'états de disponibilité de ressources conforme à l'une quelconque des revendications 1 à 7, pour lequel l'ensemble de ressources logiques est organisé en matrice, comme une mémoire de cellules de données, caractérisé en ce que les adresses de ligne et colonne des cellules de la matrice (1) sont respectivement identiques aux adresses de ligne et colonne de l'ensemble de ressources organisé en matrice.

9. Circuit de mémorisation d'états de disponibilité de ressources conforme à l'une quelconque des revendications 1 à 8, caractérisé en ce qu'il comprend des moyens d'adressage en lecture (5L, $4_0$ à $4_{I-1}$, 5C) pour lire sélectivement le bit d'état (DS) dans l'une quelconque des cellules de la matrice (1).

10. Circuit de mémorisation d'états de disponibilité de ressources conforme à l'une quelconque des revendications 1 à 9, caractérisé en ce que chacune ($1_{i,j}$) des cellules de la matrice comprend une première porte ET (10) ayant deux entrées d'adressage de ligne et colonne reliés aux moyens d'adressage en écriture (2C, 2L), une seconde porte ET (11) ayant deux entrées respectivement reliées à la sortie de la première porte ET (10) et à une borne d'entrée (DE) de toutes les cellules de la matrice (1) recevant les bits d'état à écrire, une troisième porte ET (12) ayant une entrée inverseuse reliée à la sortie de la première ET (10) et une entrée directe, et une porte OU (13) ayant deux entrées respectivement reliées aux sorties des secondes et troisième porte ET (11, 12) et une sortie reliée à l'entrée directe de la troisième porte ET (12) et constituant la sortie ($16_{i,j}$) de la cellule.

**Patentansprüche**

1. Speicherschaltung für Verfügbarkeitszustände von Quellen (MAD) zum Aufstellen von Adressen verfügbarer Quellen in einer Einheit von logischen Quellen als Funktion der freien und besetzten Zustände der Quellen mit:
   – einer Matrix (1) von 1-Bit-Zellen ($1_{0,0}$ bis $1_{l-1,i-1}$); die jeweils die Bits der Verfügbarkeitszustände ("1" und "0") der Quellen der Einheit speichern; und
   – Detektiereinrichtungen ($3_0$ bis $3_{J-1}$, 6L, $4_0$ bis $4_{l-1}$, 6C), die mit den Ausgängen ($16_{0,0}$ bis $16_{l-1, J-1}$) aller Zellen der Matrix verbunden sind, um alle Zellen der Matrix mit einem Bit des freien Zustands ("1") zu detektieren;
   dadurch gekennzeichnet, daß sie
   – beschreibbare Adressiereinrichtungen (2C, 2L) zur selektiven Adressierung der Zellen der Matrix ($1_{0,0}$ bis $1_{l-1,J-1}$), um in eine adressierte Zelle ein Bit des Verfügbarkeitszustandes der entsprechenden Quelle einzuschreiben, aufweist und
   – dadurch, daß die Detektiereinrichtungen Leseeinrichtungen ($3_0$ bis $3_{J-1}$, $4_0$ bis $4_{l-1}$), die mit den Ausgängen ($16_{0,0}$ bis $16_{l-1,J-1}$) aller Zellen der Matrix ($1_{0,0}$ bis $1_{l-1,J-1}$) verbunden sind, um die Bits des freien Zustands ("1") in den Zellen der Matrix zu lesen, und mitden Leseeinrichtungen verbundene Selektiereinrichtungen zur vorrangigen Auswahl einer der Zellen der Matrix, in die ein Bit des freien Zustands ("1") eingelesen worden ist, und zur Aufstellung der Adresse (ALS + ACS) einer der detektierten Zellen der Matrix entsprechenden verfügbaren Quelle als Funktion eines Prioritätskriteriums, das vorgegeben oder durch ein Adresswort der vorrangigen Zeile (ALP) und ein Adresswort der vorrangigen Spalte (ACP) programmiert ist, aufweisen.

2. Speicherschaltung für Verfügbarkeitszustände von Quellen nach Anspruch 1, dadurch gekennzeichnet., daß die Einrichtungen zur vorrangigen Selektion (6L, 6C) erste
   Verschiebeeinrichtungen (61L) mit Eingängen, die über die Leseeinrichtungen ($3_0$ bis $3_{J-1}$) parallel erste Informationen über die Zeilen der Matrix ("1"), und Information über eine Zeile, die kennzeichnend ist für das Vorhandensein oder Fehlen eines Bits des freien Zustands ("1") in mindestens einer der Zellen der Zeile, empfangen,
   einen ersten Prioritätscodierer (62L), der parallel die ersten von den ersten Verschiebeeinrichtungen verschobenen Informationen empfängt, um eine erste Prioritätsinformation, die kennzeichnend ist für das Vorhandensein eines Bits des freien Zustands, zu selektieren und sie in ein Codesignal der selektierten Zeile zu codieren,
   zweite Verschiebeeinrichtungen (61C) mit Eingängen (I), die über die Leseeinrichtungen ($4_0$ bis $4_{l-1}$)

parallel zweite Informationen über die Zellen einer selektierten Zeile der Matrix (1) entsprechend der ersten selektierten Prioritätsinformation und Information über eine Zelle, die kennzeichnend ist für das Vorhandensein oder Fehlen eines Bits des freien Zustands ("1") in der Zelle der Zeile, empfangen und
   einen zweiten Prioritätscodierer (62C), der parallel die zweiten von den zweiten Verschiebeeinrichtungen verschobenen Informationen empfängt, um eine zweite Prioritätsinformation, die kennzeichnend ist für das Vorhandensein eines Bits des freien Zustand, zu selektieren und diese in ein Codesignal der selektierten Spalte zu codieren, aufweisen.

3. Speicherschaltung für Verfügbarkeitszustände von Quellen nach Anspruch 2, dadurch gekennzeichnet, daß die ersten (61L) und zweiten (61C) Verschiebeeinrichtungen erste und zweite, vorzugsweise programmierbare Drehmatrizen sind, die jeweils genau so viele Eingänge und Ausgänge wie die Zählmatrix (1) Zeilen (J) und Spallen (T) aufweisen.

4. Speicherschaltung für Verfügbarkeitszustände von Quellen nach Anspruch 3, bei der erste und zweite codierte Verschiebewerte in den Drehmatrizen (61L, 61C) programmiert sind, dadurch gekennzeichnet, daß die Einrichtungen zum vorrangigen Selektieren (6L, 6C) einen ersten Addierer (ADL), der das codierte Signal der selektierten Zeile vom ersten Prioritätscodierer (62L) und den ersten programmierten und codierten Verschiebewert aus der ersten Drehmatrix (61L) empfängt, um die Adresse (ALS) der Zeile mit der selektierten Zelle mit einem Bit des freien Zustandes zu erzeugen, und einen zweiten Addierer (ADP), der das Codesignal der selektieren Spalte vom zweiten Prioritätscodierer (62C) und den zweiten programmierten und codierten Verschiebewert aus der zweiten Drehmatrix (61C) emfängt, um die Adresse (ACS) der Spalte der selektierten Zelle mit einem Bit des freien Zustands zu erzeugen, aufweisen.

5. Speicherschaltung für Verfügbarkeitszustände von Quellen nach Anspruch 1, dadurch gekennzeichnet, daß die Detektiereinrichtungen mehrere erste Detektiereinrichtungen ($3_0$ bis $3_{J-1}$, 6L), die jeweils den Zeilen der Zählmatrix (1) zugeordnet sind, um die Zeilen der Zelle mit mindestens einer Zelle der Matrix mit einem Bit des freien Zustands ("1") zu detektieren und um die Adresse (ALS) einer der detektierten Zeilen der Matrix aufzustellen, und mehrere zweite Detektiereinrichtungen ($4_0$ bis $4_{l-1}$, 6C), die jeweils den Spalten der Zählmatrix (1) zugeordnet und mit den ersten Detektiereinrichtungen ($3_0$ bis $3_{J-1}$, 6L) verbunden sind, um die Zeilen mit einem Bit des freien Zustandes ("1"), die in der Zeile enthalten sind und deren Adresse aufgestellt worden ist, zu detektieren und um die Adresse (ACS) der Spalte mit einer detektierten Zelle, die in der Zeile enthalten ist, deren Adresse aufgestellt worden ist, aufzustellen, aufweisen.

6. Speicherschaltung für Verfügbarkeitszustände von Quellen nach Anspruch 5, dadurch gekennzeichnet, daß die ersten Detektiereinrichtungen mehrere erste Leseeinrichtungen ($3_0$ bis $3_{J-1}$), die jeweils den Zeilen der Zählmatrix (1) zu geordnet sind, zum Lesen der Bits des freien Zustands ("1") in den Zeilen der Matrix, erste Einrichtungen zum vorrangigen Selektieren (61L, 62L), die mit den ersten Leseeinrichtungen verbunden sind, zur vorrangigen Auswahl einer der Zeilen der Matrix, in die mindestens ein Bit des freien Zustands ("1") eingelesen worden ist, als Funktion eines vorgegebenen oder programmierten Prioritätskriteriums der Zeilen der Matrix, und erste Einrichtungen zum Aufstellen von Adressen (ADL), die mit den ersten Einrichtungen zum vorrangigen Selektieren verbunden sind, zum Aufstellen der Adresse (ALS) der vorrangig selektierten Zeile der Matrix, aufweisen, und dadurch, daß die zweiten Detektiereinrichtungen mehrere zweite Leseeinrichtungen ($4_0$ bis $4_{I-1}$), die jeweils den Spalten der Zählmatrix (1) zugeordnet und mit den ersten Einrichtungen zum Aufstellen von Adressen (ADL) verbunden sind, zum Lesen der Bits des freien Zustands ("1") der vorrangig selektierten Zeile, zweite Einrichtungen zum vorrangigen Selektieren (61C, 62C), die mit den zweiten Leseeinrichtungen verbunden sind, zur vorrangigen Auswahl einer der Spalten der Matrix mit einer Zelle, die in der vorrangig selektierten Zeile enthalten ist und die ein eingelesenes Bit des freien Zustands aufweist, als Funktion eines vorgebenen oder programmierten Prioritätskriteriums für die Spalten der Matrix, und zweite Einrichtungen zum Aufstellen von Adressen mit zweiten Einrichtungen zum vorrangigen Selektieren um die Adresse (ACS) der vorrangig selektierten Spalte der Matrix aufzustellen, aufweisen.

7. Speicherschaltung für Verfügbarkeitszustände von Quellen nach Anspruch 6, dadurch gekennzeichnet, daß die zweiten Einrichtungen zum vorrangigen Selektieren (61L, 62L, 61C, 62C) vorzugsweise programmierbare Drehmatrizen mit ebensovielen Eingängen und Ausgängen wie Zeilen (J) und Spalten (I) in der Matrix (1) aufweisen.

8. Speicherschaltung für Verfügbarkeitszustände von Quellen nach einem der Ansprüche 1 bis 7, bei der die Einheit der logischen Quellen als Matrix wie ein Speicher von Datenzellen angeordnet ist, dadurch gekennzeichnet, daß die Zeilen- und Spaltenadressen der Zellen der Matrix (1) jeweils identisch zu den Zeilen- und Spaltenadressen der als Matrix organisierten Quellen sind.

9. Speicherschaltung für Verfügbarkeitszustände von Quellen nach einem der Ansprüche 1 bis 8, dadurch gekennzeichnet, daß sie Leseadressiereinrichtungen (5L, $4_0$ bis $4_{I-1}$, 5C) zum ausgewählten Lesen des Zustandsbits (DS) aus einer der Zellen der Matrix (1) aufweist.

10. Speicherschaltung für Verfügbarkeitszustände von Quellen nach einem der Ansprüche 1 bis 9, dadurch gekennzeichnet, daß jede ($I_{i,j}$) der Zellen der Matrix ein erstes UND-Gatter (10) mit zwei Adressiereingängen der Zeile und Spalte, die mit den Schreibadressiereinrichtungen (2C, 2L) verbunden sind, ein zweites UND-Gatter (11) mit zwei jeweils mit dem Ausgang des ersten UND-Gatters (10) und mit einer gemeinsamen Eingangsklemme (DE) aller Zellen der Matrix (1) verbundenen Eingängen, die die zu schreibenden Zustandsbits empfangen, ein drittes UND-Gatter (12) mit einem invertierenden, mit dem Ausgang des ersten UND-Gatters (10) verbundenen Eingang und einem direkten Eingang, und ein ODER-Gatter (13) mit zwei jeweils mit den Ausgängen des zweiten und dritten UND-Gatters (11, 12) verbundenen Eingängen und einem mit dem direkten Eingang des dritten UND-Gatters (12) verbundenen Ausgang, der den Ausgang ($16_{i,j}$) der Zelle bildet, aufweist.

**Claims**

1. A circuit for storing resource availability states (MAD) in order to prepare addresses of available resources in a system of logic resources in dependence upon the free and busy states of the resources comprising:
   – a matrix (1) of 1-bit cells ($1_{0,0}$ to $1_{I-1, J-1}$ respectively storing the availablity state bits ("1" and "0") of the resources of the system, and
   – detecting means ($3_0$ to $3_{J-1}$, 6L, $4_0$ to $4_{I-1}$, 6C) connected to the outputs ($16_{0,0}$ to $16_{I-1, J-1}$) of all the cells of the matrix for detecting all the matrix cells each containing a free state bit ("1"), characterised in that it comprises:
   – write-in addressing means (2C, 2L) for selectively addressing the matrix cells ($1_{0,0}$ to $1_{I-1, J-1}$) in order to write into an addressed cell an availability state bit corresponding to the respective resource, and
   – the detecting means comprise: read-out means ($3_0$ to $3_{J-1}$, $4_0$ to $4_{I-1}$) connected to the outputs ($16_{0,0}$ to $16_{I-1, J-1}$) of all the matrix cells ($1_{0,0}$ to $1_{I-1, J-1}$) in order to read the free state bits ("1") in the matrix cells; and priority selection means (6L, 6C) which are connected to the read-out means for priority selection of one of the cells of the matrix into which a free state bit ("1") is read and which prepare the address (ALS - ACS) of the available resource corresponding to one of the detected cells of the matrix in dependence upon a priority criterion predetermined or programmed by an address line priority word (ALP) and by an address column priority word (ACP) respectively.

2. A circuit according to claim 1, characterised in that the priority selection means (6L, 6C) comprise:
   first shift means (61L) having inputs receiving in parallel by way of the read-out means ($3_0$ to $3_{J-1}$) first data respectively associated with the lines of the matrix (1) the data which are associated with any line being indicative of the presence or absence of a free state bit ("1") in at least one of the cells of such line;

a first priority encoder (62L) receiving in parallel the first data shifted by the first shift means to select a first priority data indicative of the presence of a free state bit and to encode such first priority data into an encoded selected line signal;

second shift means (61C) having inputs (I) receiving in parallel by way of the read-out means ($4_0$ to $4_{I-1}$) second data respectively associated with the cells in a selected line of the matrix (1) corresponding to the said first priority data selected, the information which is associated with a cell being indicative of the presence or absence of a free state bit ("1") in said cell of said line, and

a second priority encoder (62C) receiving in parallel the second data shifted by the second shift means to select second priority data indicative of the presence of a free state bit and to encode such data into an encoded selected column signal.

3. A circuit according to claim 2, characterised in that the first shift means (61L) an second shift means (61C) are preferably programmnable first and second circular shift matrices having inputs and outputs to the number of lines (J) and columns (I) in the cell matrix (1) respectively.

4. A circuit according to claim 3 in which first and second encoded decoding values in the circular shift matrices (61L, 61C) are respectively programmed, characterised in that the priority selection means (6L, 6C) comprise a first adder (ADL) receiving the line code signal selected by the first priority encoder (62L) and the first encoded shift value programmed in the first circular shrift matrix (61L) to output the address (ALS) of the selected cell line containing a free state bit, and a second adder (ADP) receiving the column code signal selected by the second priority encoder (62C) and the second encoded shift value programmed in the second circular shift matrix (61C) to output the address (ACS) of the selected cell column containing a free state bit.

5. A circuit according to claim 1, characterised in that the detecting means comprise: a number of first detecting means ($3_0$ to $3_{J-1}$, 6L) allotted respectively to the lines of the cell matrix (1) to detect the matrix lines each having at least one matrix cell containing a free state bit ("1") in order to prepare the address (ALS) of one of the detected matrix lines; and a number of second detecting means ($4_0$ to $4_{I-1}$ 6C) allotted respectively to the columns of the cell matrix (1) and connected to the first detecting means ($3_0$ to $3_{J-1}$, 6L) to detect the cells containing a free state bit ("1") and included in the line whose address is prepared in order to prepare the address (ACS) of the column having one of the detected cells included in the said line whose address is prepared.

6. A circuit according to claim 5, characterised in that the first detecting means comprise: a number of first read-out means ($3_0$ to $3_{J-1}$) allotted respectively to the lines of the cell matrix (1) to read out the free state bits ("1") in the matrix lines; first priority selection means (61L, 62L) connected to the first read-out means for priority selection of one of the matrix lines in which at least one free state bit ("1") is read out in dependence upon a predetermined or programmed priority criterion of the matrix lines; and first address-preparing means (ADL) connected to the first priority selection means to prepare the address (ALS) of the selected priority matrix line; and the second detecting means comprise: a number of second read-out means ($4_0$ to $4_{I-1}$) allotted respectively to the columns of the cell matrix (1) and connected to the first address-preparing means (ADL) to read out the free state bits ("1") if the selected priority line; second priority selection means (61C, 62C) connected to the second read-out means for priority selection of one of the matrix columns having a cell included in the selected priority line and containing a read-out free state bit in dependence upon a predetermined or programmed priority criterion of the matrix columns; and second address-preparing means (ADC) connected to the second priority selection means (61C, 62C) for preparing the address (ACS) of the selected priority matrix column.

7. A circuit according to claim 6, characterised in that the first and second priority selection means (61L, 62L, 61C, 62C) comprise preferably programmable circular shift matrices having inputs and outputs to the same number as there are lines (J) and columns (I) respectively in the matrix (1).

8. A circuit according to any of claims 1 to 7 for which the logical resources system is arranged matrix-fashion like a data cell memory, characterised in that the line and column addresses of the cells of the matrix (1) are respectively identical to the line and column addresses of the matrix-arranged set of resources.

9. A circuit according to any of claims 1 to 8, characterised in that it comprises read-out addressing means (5L, $4_0$ to $4_{I-1}$, 5C) for selectively reading out the state bit (DS) in any of the cells of the matrix (1).

10. A circuitn according to any of claim 1 to 9, characterised in that each ($1_{i,j}$) of the matrix cells comprises: a first AND gate (10) having two line and column addressing inputs connected to the write-in addressing means (2C, 2L); a second AND gate (11) having two inputs connected to the output of the first AND gate (10) and to input terminal (DE), respectively, of all the cells of the matrix receiving the state bits to be written in; a third AND gate (12) having an inverting input connected to the output of the first AND gate (10) and a direct input; and an OR gate (13) having two inputs respectively connected to the outputs of the second and third AND gate: (11, 12) and an output connected to the direct input of the third AND gate (12) and serving as the cell output ($16_{i,j}$).

Fig. 1.

EP 0 298 793 B1

# FIG.2